# EUROPEAN PATENT APPLICATION

(11) **EP 4 414 602 A1**
(43) Date of publication of application: **14.08.2024**
(21) Application number: 22889976.1
(22) Date of filing: 02.11.2022
(51) Int. Cl.: F17C 13/12, B65D 90/24

(54) **LOW-TEMPERATURE LIQUEFIED GAS TANK**

(30) Priority: 05.11.2021 JP 2021181044
(71) Applicant: KAWASAKI JUKOGYO KABUSHIKI KAISHA, Kobe-shi, Hyogo 650-8670 (JP)
(72) Inventor: EGAMI, Takeshi, Kobe-shi, Hyogo 650-8670 (JP); FUJII, Mahito, Kobe-shi, Hyogo 650-8670 (JP)
(74) Representative: Müller-Boré & Partner Patentanwälte PartG mbB
(86) International application number: PCT/JP2022/040983
(87) International publication number: WO 2023/080156

(57) **Abstract**

A low-temperature liquefied gas tank includes a flat-bottomed tank body that stores low-temperature liquefied gas, a dike that is erected with a separation space with respect to an outer periphery of the tank body and surrounds the tank body, and a roof that seals at least an upper side of the separation space.

## Description

### Technical Field

The present disclosure relates to a flat bottomed tank that stores low-temperature liquefied gas.

### Background Art

As a storage facility for low-temperature liquefied gas such as liquefied hydrogen and liquefied natural gas, a flat bottomed liquefied gas tank including a flat bottomed tank body that stores the liquefied gas and a dike that surrounds an outer periphery of the tank body is known. The dike is constructed for the purpose of preventing stored liquefied gas from flowing out when damage or the like occurs in the tank body. There is a case where the dike is constructed integrally with an outer tank of the tank body, or a case where the dike is erected apart from the outer tank. In any case, a region surrounded by the dike is a storage space for leaked liquefied gas (for example, Patent Literature 1).

When the dike and the outer tank of the tank body are integrated, there is an advantage that a site area of a tank facility including the dike can be reduced. However, there is also a case where securing a space between the dike and the outer tank of the tank body is requested. For example, in a case where a pump for discharging liquefied gas in the tank body is arranged on a side of the outer tank of the tank, it may be requested to secure the space as an installation place of the tank. In this case, influence of vaporization and diffusion of liquefied gas leaked into the space on a surrounding environment becomes a problem.

### Citation List

### Patent Literature

Patent Literature 1: JP 2021-17920 A

### Summary of Invention

An object of the present disclosure is to provide a low-temperature liquefied gas tank provided with a separation space between a tank body and a dike, the low-temperature liquefied gas tank being capable of reducing influence on a surrounding environment at the time of leakage of stored liquefied gas into the separation space.

A low-temperature liquefied gas tank according to an aspect of the present disclosure includes a flat bottomed tank body that stores a low-temperature liquefied gas, a dike that is erected with a separation space from an outer periphery of the tank body and surrounds the tank body, and a roof that seals at least an upper side of the separation space.

According to the present disclosure, it is possible to provide a low-temperature liquefied gas tank provided with a separation space between a tank body and a dike, the low-temperature liquefied gas tank being capable of reducing influence on a surrounding environment at the time of leakage of stored liquefied gas into the separation space.

### Brief Description of Drawings

FIG. 1 is a cross-sectional view illustrating a low-temperature liquefied gas tank according to a first embodiment of the present disclosure.
FIG. 2 is a cross-sectional view illustrating the low-temperature liquefied gas tank according to a second embodiment.
FIG. 3 is a diagram illustrating an implementation situation of maintenance work in the low-temperature liquefied gas tank according to the second embodiment.
FIG. 4 is a cross-sectional view illustrating the low-temperature liquefied gas tank according to a third embodiment.
FIG. 5 is a cross-sectional view illustrating the low-temperature liquefied gas tank according to a fourth embodiment.
FIG. 6 is a cross-sectional view illustrating the low-temperature liquefied gas tank according to a fifth embodiment.
FIG. 7 is a cross-sectional view illustrating the low-temperature liquefied gas tank according to a sixth embodiment.

### Description of Embodiments

Hereinafter, an embodiment of a low-temperature liquefied gas tank according to the present disclosure will be described in detail with reference to the drawings. The low-temperature liquefied gas tank of the present disclosure is a tank that stores liquefied gas of low temperature, and is a flat bottomed tank having a ground stationary multiple shell structure. The stored liquefied gas is, for example, low-temperature liquefied gas such as liquefied hydrogen, liquid helium, liquid nitrogen, liquefied natural gas, or liquefied petroleum gas. In particular, the low-temperature liquefied gas tank according to the present disclosure is suitable for storing liquefied hydrogen.

### [First embodiment]

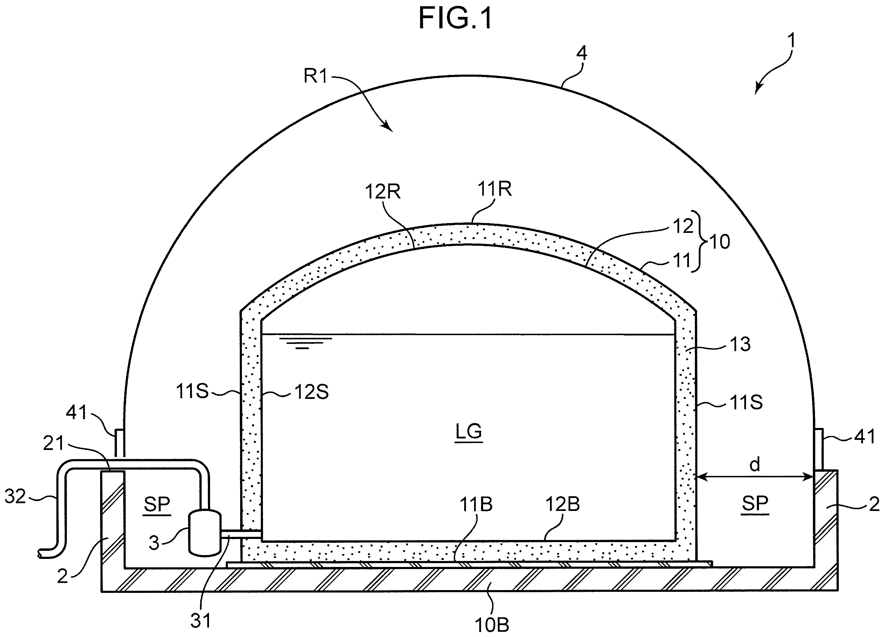

FIG. 1 is a cross-sectional view illustrating a low-temperature liquefied gas tank 1 according to a first embodiment of the present disclosure. The low-temperature liquefied gas tank 1 is a multiple shell tank that stores liquefied gas LG of an extremely low temperature such as liquefied hydrogen. The low-temperature liquefied gas tank 1 includes a tank body 10 having a multiple shell structure, a dike 2 surrounding the tank body 10, a pump 3 that discharges the low-temperature liquefied gas LG in the tank body 10 to the outside, and a roof 4 covering an upper opening of the dike 2 and the tank body 10. FIG. 1 illustrates a double shell tank as the multiple shell tank.

The tank body 10 is a flat bottomed tank that stores the low-temperature liquefied gas LG, and includes an outer tank 11 erected on a tank base 10B, an inner tank 12 contained in the outer tank 11, and a cold insulation layer 13 arranged between the outer tank 11 and the inner tank 12. The tank base 10B is a concrete layer constituting a base portion of the tank body 10. Both the outer tank 11 and the inner tank 12 have a circular shape in top view, and are arranged concentrically. Note that the tank body 10 may be a triple shell tank including an intermediate tank between the outer tank 11 and the inner tank 12.

The outer tank 11 is a sealed body made from metal such as carbon steel or stainless steel, and includes an outer tank bottom plate 11B, an outer tank side plate 11S (outer periphery of a tank body), and an outer tank roof 11R. The outer tank bottom plate 11B is laid immediately above the tank base 10B, and has a disc shape. The outer tank side plate 11S is erected from a peripheral edge of the outer tank bottom plate 11B and has a cylindrical shape. The outer tank roof 11R is attached to an upper end of the outer tank side plate 11S so as to close an upper surface opening of the outer tank side plate 11S having a cylindrical shape, and has a dome shape.

The inner tank 12 is a tank that actually stores the low-temperature liquefied gas LG. The inner tank 12 is a sealed body made from metal such as stainless steel, and is surrounded by the outer tank 11 with a space of a predetermined interval to be the cold insulation layer 13. The inner tank 12 includes an inner tank bottom plate 12B, an inner tank side plate 12S, and an inner tank roof 12R. The inner tank bottom plate 12B has a disk shape having a diameter smaller than that of the outer tank bottom plate 11B. The inner tank side plate 12S is erected from a peripheral edge of the inner tank bottom plate 12B and has a cylindrical shape. The inner tank roof 12R is attached to an upper end of the inner tank side plate 12S and has a dome shape. The low-temperature liquefied gas LG is stored inside the inner tank 12, and gas vaporized from the low-temperature liquefied gas LG is stored in an upper layer portion of the inner tank 12.

The cold insulation layer 13 is a layer for enhancing cool keeping property of the inner tank 12 by using a gap between the outer tank 11 and the inner tank 12 as a heat insulating space. The cold insulation layer 13 may include a powder heat insulating material or a solid heat insulating material. For example, a gap between the outer tank roof 11R and the inner tank roof 12R is filled with a powder heat insulating material such as granular perlite. A gap between the outer tank side plate 11S and the inner tank side plate 12S is filled with granular perlite, glass wool, and the like. A heat insulating block material such as foam glass is laid in a gap between the outer tank bottom plate 11B and the inner tank bottom plate 12B.

The cold insulation layer 13 is filled with a refrigerant such as granular perlite and gas such as hydrogen gas, helium gas, nitrogen gas, or the like. As these types of gas, it is desirable to use gas having a boiling point equal to or less than that of the low-temperature liquefied gas LG to be stored. For example, in a case where the low-temperature liquefied gas LG is liquefied hydrogen gas, it is desirable to use hydrogen gas or helium gas as gas to be filled with. For example, a configuration in which a communication pipe for allowing an internal space of the inner tank 12 to communicate with a space of the cold insulation layer 13 is installed, and vaporized gas of the stored low-temperature liquefied gas LG is introduced into the cold insulation layer 13 may be employed.

The dike 2 is erected to prevent the stored low-temperature liquefied gas LG from flowing out to a periphery of a tank in the event of damage or the like in the tank body 10. The dike 2 is a cylindrical bank erected with a separation space SP having a predetermined separation distance d from an outer periphery of the tank body 10, that is, the outer tank side plate 11S. The separation space SP is used as a storage space for the low-temperature liquefied gas LG that leaks. The dike 2 is constructed with, for example, reinforced concrete (RC) or pre-stressed concrete (PC). The separation distance d can be appropriately set based on an assumed liquid leakage amount. If a height of a top portion 21 of the dike 2 is increased, the separation distance d can be reduced, and a diameter of the dike 2 and thus a diameter of the roof 4 can be reduced. Note that a liner plate made from metal may be provided on an inner surface of the dike 2.

The pump 3 is arranged in the separation space SP on a side of the tank body 10, and discharges the low-temperature liquefied gas LG to the outside through a side plate of the tank body 10. An extraction pipe 31 and a discharge pipe 32 are coupled to the pump 3. The extraction pipe 31 is a pipe line extending from the outside of the tank body 10 to an internal space of the inner tank 12 through the outer tank side plate 11S, the cold insulation layer 13, and the inner tank side plate 12S. One end of the extraction pipe 31 faces the low-temperature liquefied gas LG stored in the inner tank 12, and the other end is connected to an inlet end of the pump 3. The discharge pipe 32 is a pipe line extending from the separation space SP over the top portion 21 of the dike 2 to the outside of the low-temperature liquefied gas tank 1. One end of the discharge pipe 32 is connected to an outlet end of the pump 3, and the other end is connected to an inlet end of a device using the low-temperature liquefied gas LG as fuel or a conveyance truck.

In the present embodiment, the pump 3 for discharging the low-temperature liquefied gas LG in the tank body 10 is arranged not inside the inner tank 12 that stores the low-temperature liquefied gas LG but on a side of the tank body 10 where maintenance work is easily performed. In this case, maintenance work requires a space for installing the pump 3 on a side of the tank body 10, but in the present embodiment, since the pump 3 can be installed by utilizing the separation space SP as a storage space for leaked gas, there is no problem in securing an installation place.

The roof 4 is a roof having a dome structure that covers an upper side of the separation space SP and an upper side of the tank body 10 so as to seal them. The roof 4 has a dome shape and is fixed on a support structure 41 erected on the top portion 21 of the dike 2. The support structure 41 is a cylindrical structure made from, for example, concrete or metal. Note that the configuration may be such that the support structure 41 is omitted, and the roof 4 is directly attached to the top portion 21 of the dike 2. The roof 4 can be manufactured, for example, by stacking and welding a plurality of steel piece plates in a hemispherical shape. The roof 4 may be made from a concrete member, a resin member, a resin member containing a reinforcing fiber, or an air-impermeable woven fabric or nonwoven fabric. Further, the roof 4 may be formed by assembling an aggregate in a dome shape and bonding a piece plate made from various materials.

By installation of the roof 4, a surrounding space of the tank body 10 from the top portion 21 of the dike 2 to an upper side of the tank body 10 can be made a closed space. An internal space of the roof 4 may be an air layer or may be filled with inert gas such as nitrogen gas. In the former case, the entire internal space of the roof 4 can be used as a maintenance space, and maintenance work can be facilitated. In the latter case, explosion-proof property can be further enhanced.

According to the low-temperature liquefied gas tank 1 according to the first embodiment, the separation space SP between the dike 2 and the tank body 10 becomes a storage space for the low-temperature liquefied gas LG that leaks when the tank body 10 is damaged or the like. The pump 3 that discharges the low-temperature liquefied gas LG from the tank body 10 to the outside can be installed by utilizing the separation space SP. For example, when the low-temperature liquefied gas LG to be stored is liquefied hydrogen gas and the pump 3 is installed in the inner tank 12, it is necessary to take out the pump 3 installed in the low-temperature liquefied gas LG to the outside, and it is difficult to design a maintenance method excellent in safety and workability. On the other hand, in the present embodiment, since the pump 3 is arranged in the separation space SP on a side of the outer tank side plate 11S, work of taking out the pump 3 from the inside of the tank body 10 itself does not occur, and maintenance work can be facilitated.

In addition to the above, measures are also taken in a case where the low-temperature liquefied gas LG leaks into the separation space SP. That is, the low-temperature liquefied gas LG leaking and accumulated in the separation space SP may be vaporized and diffused to the surroundings. In a case where the stored low-temperature liquefied gas LG is flammable, influence on a surrounding environment is large. However, an upper side of the separation space SP is sealed by the roof 4. For this reason, diffusion of the vaporized low-temperature liquefied gas LG is stopped by the roof 4, and influence on a surrounding environment can be reduced. In particular, the separation space SP and the tank body 10 are completely covered by the roof 4 having a dome structure having the dike 2 as a base portion. Therefore, if damage or the like occurs in any portion of the tank body 10, diffusion of the vaporized low-temperature liquefied gas LG can be prevented.

### [Second embodiment]

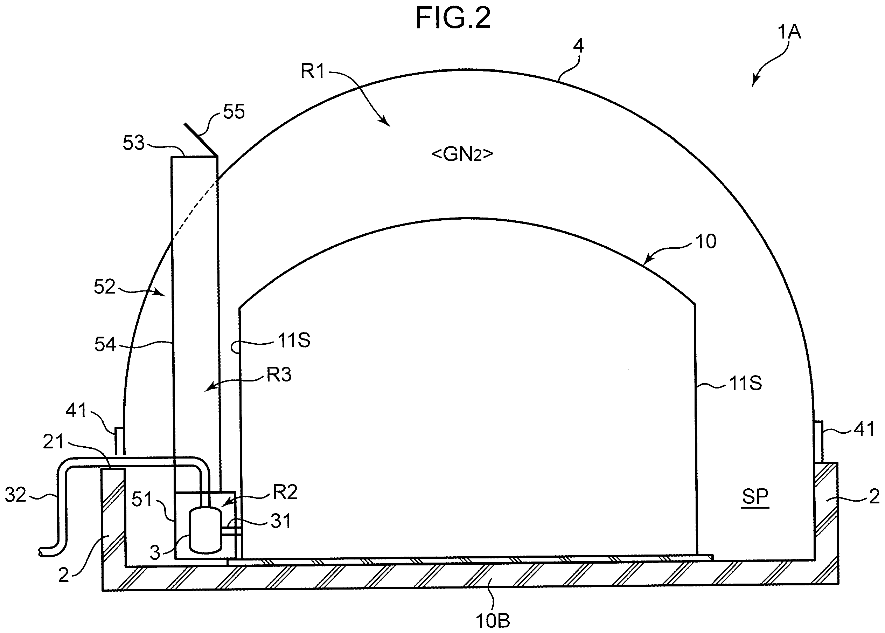

FIG. 2 is a cross-sectional view illustrating a low-temperature liquefied gas tank 1A according to a second embodiment. The tank body 10, the dike 2, the pump 3, and the roof 4, which are basic structural portions of the low-temperature liquefied gas tank 1, are the same as those of the low-temperature liquefied gas tank 1 of the first embodiment, and thus, are omitted from description here. Note that, in FIG. 2, description of an internal structure of the tank body 10 is omitted. As the tank body 10, for example, a double shell tank similar to FIG. 1 or a triple shell tank can be applied.

The low-temperature liquefied gas tank 1A is different from the low-temperature liquefied gas tank 1 of the first embodiment in that the low-temperature liquefied gas tank 1A includes a housing chamber 51 that houses the pump 3 and a passage 52 leading to the housing chamber 51. The housing chamber 51 is arranged in the separation space SP on a side of the tank body 10, and has space volume capable of housing the pump 3, and a part of the extraction pipe 31 and the discharge pipe 32.

The passage 52 extends through the roof 4 to the housing chamber 51. The passage 52 includes an upper end opening 53 serving as an entrance and an exit, a vertical passage portion 54 extending vertically downward from the upper end opening 53, and an opening and closing door 55 that opens and closes the upper end opening 53. The upper end opening 53 is located above the roof 4. The vertical passage portion 54 is a passage having a rectangular or circular cross section and linearly extending in a vertical direction, and has a lower end opening communicates with the housing chamber 51. It is desirable to install a ladder or the like in the vertical passage portion 54 for a worker to move forward and backward. The opening and closing door 55 is always in a closed state and is opened at the time of maintenance work or the like. By installation of the opening and closing door 55, it is possible to prevent rainwater, dust, and the like from entering the housing chamber 51 and the passage 52, and to keep them clean.

The housing chamber 51 and the passage 52 are constructed as a space isolated from a space in the roof 4. That is, a housing chamber inner space R2, which is a space in the housing chamber 51, and a passage inner space R3, which is a space in the passage 52, are isolated from a roof inner space R1, which is a space surrounded by the roof 4 and the dike 2. By the above, if the roof inner space R1 is set as any gas environment, the housing chamber inner space R2 and the passage inner space R3 into and out of which a worker enters and exits at the time of maintenance work or the like can be maintained in an environment suitable for work.

As described above, in order to enhance explosion-proof property, it is desirable to fill the roof inner space R1 with inert gas such as nitrogen gas (GN₂). In this case, when the pump 3 is installed in the separation space SP in an exposed manner, it is necessary to perform work of purging nitrogen gas with which the roof inner space R1 is filled at the time of maintenance work. In a case where purging is not performed, an oxygen cylinder needs to be carried by a worker. In either case, workability of maintenance is not excellent. However, according to the second embodiment, if the roof inner space R1 is filled with gas in which a living human body cannot perform activity, the housing chamber inner space R2 and the passage inner space R3 can be filled with air. Therefore, since a worker can easily access the pump 3 in the housing chamber 51 through the passage 52, maintenance work and the like can be facilitated.

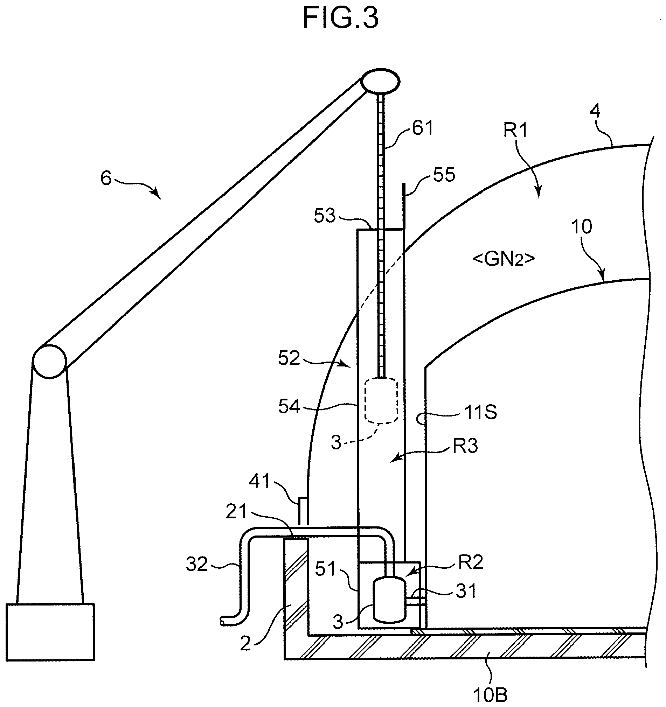

The vertical passage portion 54 of the passage 52 only needs to have a size that allows passage of a worker. However, in consideration of replacing operation of the pump 3, the vertical passage portion 54 desirably has a size that allows passage of the pump 3. When a failure or deterioration occurs in the pump 3, it may be necessary to replace the pump 3. FIG. 3 is a diagram illustrating a state of replacing work of the pump 3 in the low-temperature liquefied gas tank 1A illustrated in FIG. 2. When the vertical passage portion 54 is a passage linearly extending in the vertical direction and has a size that allows passage of the pump 3, the pump 3 can be suspended and carried in and out through the vertical passage portion 54.

In this case, as illustrated in FIG. 3, a suspension crane 6 is installed in the vicinity of a periphery of the tank body 10. In a case where the pump 3 is carried out of the housing chamber 51, the opening and closing door 55 is opened, and a suspension wire 61 is lowered from the upper end opening 53. The pump 3 from which the extraction pipe 31 and the discharge pipe 32 are removed is suspended at a lower end of the suspension wire 61. After the above, the suspension crane 6 is operated to lift the pump 3, and the pump 3 is carried out to the outside of the low-temperature liquefied gas tank 1. The pump 3 is carried into the housing chamber 51 in a process opposite to the above.

### [Third embodiment]

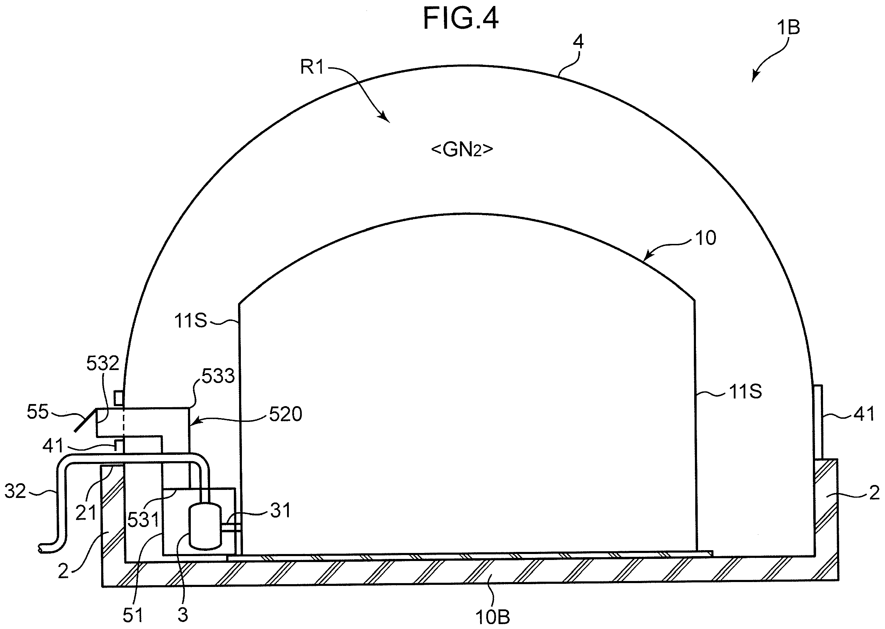

FIG. 4 is a cross-sectional view illustrating a low-temperature liquefied gas tank 1B according to a third embodiment. The low-temperature liquefied gas tank 1B is different from the low-temperature liquefied gas tank 1A of the second embodiment in a form of a passage 520 leading to the housing chamber 51 that houses the pump 3. The passage 520 is not a passage extending linearly in the vertical direction like the passage 52 of the second embodiment, but is a passage bent to a side of the tank body 10.

A one end opening 531 of the passage 520 communicates with a space of the housing chamber 51. Another end opening 532 of the passage 520 penetrates the support structure 41 and protrudes to a side near the top portion 21 of the dike 2. The passage 520 extends in the vertical direction from the housing chamber 51 to a position higher than the top portion 21, bends at a right angle to the outside at a bent portion 533 arranged at a position lower than an upper end of the support structure 41, penetrates the support structure 41, and extends in a horizontal direction. Note that it is desirable to install a ladder or the like extending from the ground to the other end opening 532 by using the dike 2. According to the low-temperature liquefied gas tank 1B of the third embodiment, there is an advantage that a path length from the outside of the low-temperature liquefied gas tank 1B to the housing chamber 51 of the pump 3 can be substantially minimized. Note that the passage 520 may have an aspect of penetrating the roof 4 in the vicinity of the support structure 41.

### [Fourth embodiment]

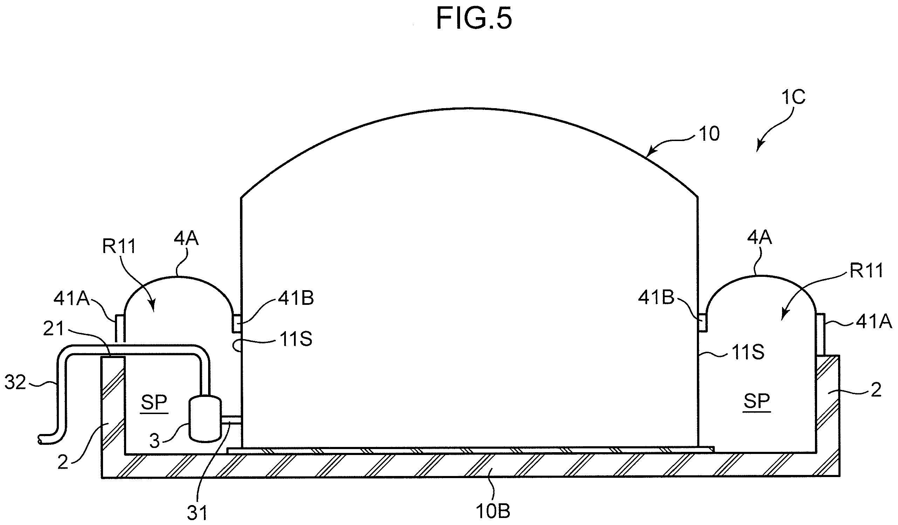

FIG. 5 is a cross-sectional view illustrating a low-temperature liquefied gas tank 1C according to a fourth embodiment. In the fourth embodiment, a roof having a shape different from those of the first to third embodiments described above is exemplified. The low-temperature liquefied gas tank 1C includes an annular roof 4A that seals immediately above the separation space SP. Other structures are the same as those of the low-temperature liquefied gas tank 1 of the first embodiment.

The separation space SP located between the tank body 10 and the dike 2 that are concentrically constructed is a space having an annular shape in a top view. The annular roof 4A is arranged so as to cover the separation space SP having an annular shape. The pump 3 arranged in the separation space SP is also covered with the annular roof 4A. Specifically, the annular roof 4A has a hemispherical bulging shape, and has an outer peripheral side fixed to a support structure 41A having a cylindrical shape erected on the top portion 21 of the dike 2 and an inner peripheral side fixed to a tank side end portion 41B attached to the outer tank side plate 11S of the tank body 10. A portion where the extraction pipe 31 penetrates the tank body 10 is a portion where liquid leakage is relatively likely to occur. For this reason, the tank side end portion 41B is desirably arranged at a position higher than a penetrating portion of the extraction pipe 31.

Inert gas such as nitrogen gas or air is sealed in the roof inner space R11 which is an internal space sealed by the annular roof 4A. In a case where inert gas is sealed, the housing chamber 51 of the pump 3 and the passages 52 and 520 as described in the second and third embodiments are desirably provided. With the annular roof 4A, it is possible to prevent diffusion of the low-temperature liquefied gas LG leaked into the separation space SP and vaporized. That is, according to the low-temperature liquefied gas tank 1C of the fourth embodiment, diffusion of vaporized gas can be prevented with a minimum roof area.

### [Fifth embodiment]

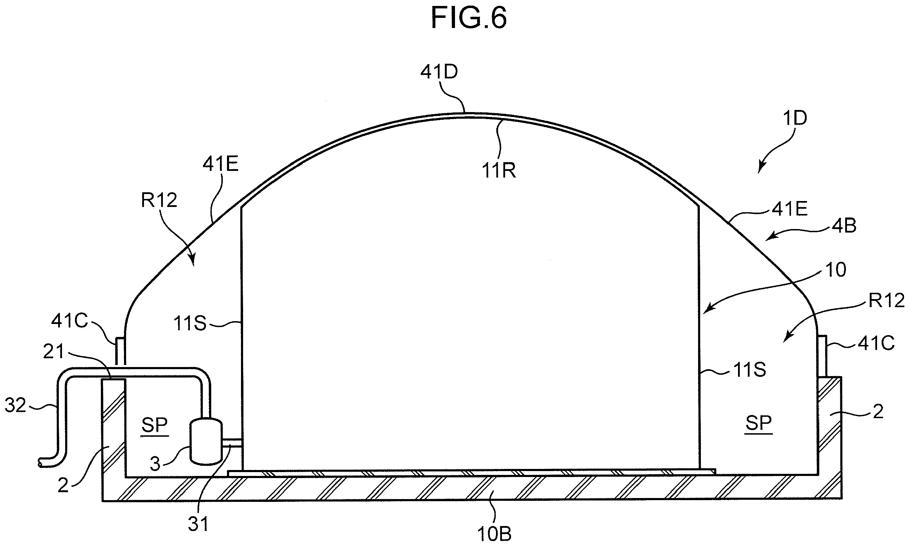

FIG. 6 is a cross-sectional view illustrating a low-temperature liquefied gas tank 1D according to a fifth embodiment. Also in the fifth embodiment, a roof having a shape different from those of the first to third embodiments described above is exemplified. The low-temperature liquefied gas tank 1D includes a roof 4B having a dome shape in an aspect of sealing an upper side of the separation space SP and being in proximity to or in contact with the outer tank roof 11R of the tank body 10. Other structures are the same as those of the low-temperature liquefied gas tank 1 of the first embodiment.

The roof 4B is attached to a support structure 41C having a cylindrical shape that is erected on the top portion 21 of the dike 2, and includes a roof center portion 41D along a curved shape of the outer tank roof 11R and a roof body portion 41E covering an upper side of the separation space SP. The separation space SP in which the pump 3 is arranged is substantially sealed by the roof body portion 41E. Inert gas such as nitrogen gas or air is sealed in a roof inner space R12 sealed by the roof body portion 41E.

According to the low-temperature liquefied gas tank 1D of the fifth embodiment, unlike the low-temperature liquefied gas tank 1C of the fourth embodiment, not only an upper side of the separation space SP but also the entire tank body 10 is covered with the roof 4B. Therefore, if damage or the like occurs in any portion of the tank body 10, diffusion of the vaporized low-temperature liquefied gas LG can be prevented. Further, a height of the roof 4 can be reduced as compared with the low-temperature liquefied gas tank 1 of the first embodiment. Furthermore, since volume of the roof inner space R12 can be reduced, in a case where filling with nitrogen gas or the like is performed, time required for the filling work and the purge work can be shortened. Note that the roof center portion 41D is desirably supported by the outer tank roof 11R via an appropriate support material. By the above, there is an advantage that strength of the roof 4B can be increased or thickness of a piece plate used for constructing the roof 4B can be reduced.

### [Sixth embodiment]

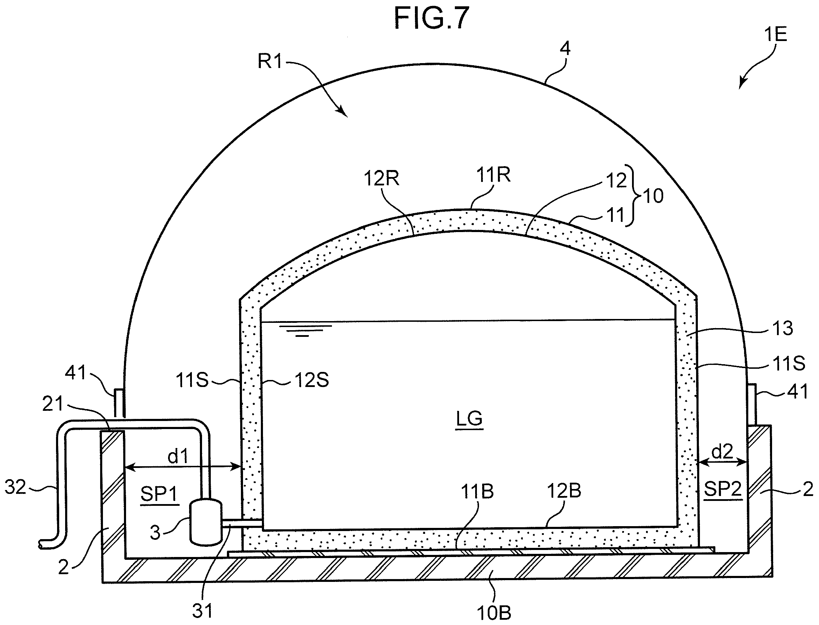

FIG. 7 is a cross-sectional view illustrating a low-temperature liquefied gas tank 1E according to a sixth embodiment. A basic structure of the low-temperature liquefied gas tank 1E is similar to that of the low-temperature liquefied gas tank 1 illustrated in FIG. 1, but the form of the separation space SP is different. In the low-temperature liquefied gas tank 1, the dike 2 and the tank body 10 are concentrically arranged, and the separation space SP between them has a constant width in a circumferential direction. On the other hand, the low-temperature liquefied gas tank 1E of the present embodiment is constructed in an aspect that the center in a radial direction of the dike 2 is eccentric with respect to the center in the radial direction of the tank body 10.

With the above eccentric arrangement, a wide area SP1 having a relatively wide separation distance d1 and a narrow area SP2 having a relatively narrow separation distance d2 are formed in the separation space SP. The pump 3 is arranged in the wide area SP1. A certain space is required to install the pump 3. However, it is not necessary to secure a sufficient space for installing the pump 3 over the entire circumference of the tank body 10. Therefore, the wide area SP1 in which the pump 3 can be installed only needs to be provided in a part of the separation space SP, and there is no problem if the remaining part is the narrow area SP2 in which installation of the pump 3 is not considered.

According to the low-temperature liquefied gas tank 1E of the sixth embodiment, since the wide area SP1 in which the pump 3 can be partially installed is secured by eccentric arrangement of the dike 2 and the tank body 10, a diameter of the dike 2 can be reduced. By the above, there is an advantage that the roof 4 installed on the dike 2 can also be reduced in size as compared with the low-temperature liquefied gas tank 1 of the first embodiment. Note that an aspect of securing of the wide area SP1 is not limited to eccentric arrangement of the dike 2 and the tank body 10. For example, after the dike 2 and the tank body 10 are concentrically arranged, the wide area SP1 may be secured by causing the dike 2 to protrude to the outer side in the radial direction in an arrangement location of the pump 3.

Although the first to sixth embodiments of the present invention are described above, the present invention is not limited to these embodiments, and various modified embodiments can be taken. For example, in the low-temperature liquefied gas tanks 1 to 1E of the first to sixth embodiments, an example in which the tank body 10 and the dike 2 are erected on the ground is shown, but an aspect in which the tank body 10 and the dike 2 are constructed in the ground may be employed. Specifically, the dike 2 is constructed such that the top portion 21 is at a height of a ground surface, and the tank body 10 is constructed in the ground with the separation space SP. The roof 4 is provided on the dike 2 to cover the separation space SP and an upper side of the tank body 10. According to this aspect, a low-temperature liquefied gas tank more excellent in safety can be constructed.

### [Summary of present disclosure]

The specific embodiment described above includes disclosure having a configuration below.

A low-temperature liquefied gas tank according to the present disclosure includes a flat bottomed tank body that stores a low-temperature liquefied gas, a dike that is erected with a separation space from an outer periphery of the tank body and surrounds the tank body, and a roof that seals at least an upper side of the separation space.

According to this low-temperature liquefied gas tank, the separation space becomes a storage space for low-temperature liquefied gas that leaks when the tank body is damaged or the like. Low-temperature liquefied gas accumulated in the storage space may be vaporized and diffused around. In a case where stored low-temperature liquefied gas is flammable, influence on a surrounding environment is large. However, since an upper side of the separation space is sealed by the roof, diffusion of vaporized low-temperature liquefied gas is stopped by the roof, and influence on a surrounding environment can be reduced.

In the low-temperature liquefied gas tank described above, the roof desirably has a dome shape covering an upper side of the separation space and an upper side of the tank body.

According to this low-temperature liquefied gas tank, the separation space and the tank body can be completely covered with the dome-shaped roof having the dike as a base portion. Therefore, if damage or the like occurs in any part of the tank body, diffusion of vaporized low-temperature liquefied gas can be prevented.

The low-temperature liquefied gas tank described above desirably further include a pump that is arranged in the separation space and discharges low-temperature liquefied gas in the tank body to outside through a side plate of the tank body.

According to this low-temperature liquefied gas tank, it is possible to arrange the pump at an appropriate place of the separation space and to discharge low-temperature liquefied gas in the tank body through a side plate of the tank body. According to such a discharge method, since the pump is arranged outside the tank, maintenance work of the pump can be performed with good workability. On the other hand, if low-temperature liquefied gas leaks into the separation space and vaporizes, diffusion of the low-temperature liquefied gas can be prevented by the presence of the roof.

The low-temperature liquefied gas tank described above desirably further include a housing chamber that is arranged in the separation space and houses the pump, and a passage that penetrates the roof and leads to the housing chamber, in which a space in the housing chamber and a space in the passage are desirably isolated from a space in the roof.

According to this low-temperature liquefied gas tank, if the space in the roof is filled with, for example, inert gas, the housing chamber of the pump and the passage to the housing chamber can be made a space filled with air. Therefore, a worker can access the pump without requiring an oxygen cylinder or the like, and maintenance work and the like can be facilitated.

In the low-temperature liquefied gas tank described above, the passage desirably includes an upper end opening serving as an entrance and an exit and a vertical passage portion extending vertically downward from the upper end opening, and the vertical passage portion desirably has a size that allows passage of the pump.

According to this low-temperature liquefied gas tank, replacement and the like of the pump can be easily performed through the upper end opening of the passage and the vertical passage portion. For example, the pump can be suspended by a suspension crane, and carried out and carried in through the passage.

In the low-temperature liquefied gas tank described above, when an opening and closing door for opening and closing the upper end opening is provided, entry of rainwater, dust, and the like can be prevented, and the passage and the housing chamber can be kept clean.

The low-temperature liquefied gas tank described above may have an aspect in which the separation space has a wide area in which the pump can be arranged and a narrow area narrower than the wide area. According to this aspect, it is possible to reduce the size of the dike and eventually reduce the size of the roof.

In the low-temperature liquefied gas tank described above, when the tank body has a multiple shell structure, a cooling effect can be enhanced.

## Claims

1. A low-temperature liquefied gas tank comprising:
a flat-bottomed tank body that stores low-temperature liquefied gas;
a dike that is erected with a separation space with respect to an outer periphery of the tank body and surrounds the tank body; and
a roof that seals at least an upper side of the separation space.

2. The low-temperature liquefied gas tank according to claim 1, wherein the roof has a dome shape covering an upper side of the separation space and an upper side of the tank body.

3. The low-temperature liquefied gas tank according to claim 1 or 2, further comprising a pump that is arranged in the separation space and discharges low-temperature liquefied gas in the tank body to outside through a side plate of the tank body.

4. The low-temperature liquefied gas tank according to claim 3, further comprising:
a housing chamber that is arranged in the separation space and houses the pump; and
a passage that penetrates the roof and leads to the housing chamber,
wherein a space in the housing chamber and a space in the passage are isolated from a space in the roof.

5. The low-temperature liquefied gas tank according to claim 4, wherein
the passage includes an upper end opening serving as an entrance and an exit and a vertical passage portion extending vertically downward from the upper end opening, and
the vertical passage portion has a size that allows passage of the pump.

6. The low-temperature liquefied gas tank according to claim 5, further comprising an opening and closing door that opens and closes the upper end opening.

7. The low-temperature liquefied gas tank according to any one of claims 3 to 6, wherein the separation space has a wide area in which the pump can be arranged and a narrow area narrower than the wide area.

8. The low-temperature liquefied gas tank according to any one of claims 1 to 7, wherein the tank body has a multiple shell structure.
